# EUROPÄISCHE PATENTANMELDUNG

(11) **EP 2 368 684 A2**
(43) Veröffentlichungstag der Anmeldung: **28.09.2011**
(21) Anmeldenummer: 11159175.6
(22) Anmeldetag: 22.03.2011
(51) Int. Cl.: B29C 33/22, B29C 33/30, B29C 33/34

(54) **Schließvorrichtung**

(30) Priorität: 22.03.2010 DE 202010003981 U
(71) Anmelder: FRIMO Group GmbH, 49504 Lotte (DE)
(72) Erfinder: Kasprowicz, Stanislaw, 36251 Bad Hersfeld (DE)
(74) Vertreter: HOFFMANN EITLE

(57) **Zusammenfassung**

Die Erfindung betrifft eine Schließvorrichtung (10) zum Bearbeiten von Bauteilen, unter anderem von Kraftfahrzeugverkleidungselementen, umfassend einen um eine im Wesentlichen vertikale Achse drehbaren Drehtisch (12) mit mindestens zwei unteren Abschnitten (18), wobei die unteren Abschnitte (18) dazu ausgebildet sind, um ein Werkzeugoberteil (20) und ein Werkzeugunterteil (21) in einer Ruhestellung gemeinsam aufzunehmen, und eine Schließeinrichtung (14), die dazu ausgebildet ist, um eines der Werkzeugoberteile (20), das lösbar an ihr befestigt ist, in Richtung des Werkzeugunterteils (21) zu bewegen.

## Beschreibung

### Technisches Gebiet

Die Erfindung betrifft eine Schließvorrichtung zum Bearbeiten von Bauteilen, unter anderem von Kraftfahrzeugverkleidungselementen, mit einer Schließeinrichtung, die dazu geeignet ist, ein Werkzeugoberteil aufzunehmen und das Werkzeugoberteil in Richtung eines Werkzeugunterteils zu bewegen. Werkzeugunterteil und Werkzeugoberteil werden im Weiteren auch als Werkzeug bezeichnet.

Solche Schließvorrichtungen werden beispielsweise in der Automobilindustrie verwendet, um Verkleidungselemente wie beispielsweise eine Armaturenbrettverkleidung, eine Türinnenverkleidung und dergleichen zu bearbeiten. Diese Schließvorrichtungen können an einer Fertigungsstraße stehen, in welcher teilweise zumindest zwei Bauteilmodelle wie beispielsweise zwei Fahrzeugmodelle gefertigt werden.

### Stand der Technik

Es sind Schließvorrichtungen bekannt, welche solche Bauweisen aufweisen, dass mindestens eine der vier Seiten offen ist. Wenn ein Bauteilwechsel erfolgen soll, kann ein Werkzeug an einer der Seiten gewechselt werden. Dazu wird die Schließeinrichtung geschlossen, das heißt das Werkzeugoberteil wird auf dem Werkzeugunterteil abgelegt. Danach werden beide Werkzeughälften gelöst. Anschließend wird das Werkzeug entnommen und ein anderes Werkzeug eingebaut. Der Wechsel eines Werkzeuges nimmt somit sehr viel Zeit in Anspruch und kann unter Umständen einen Zeitraum von 15 Minuten bis 4 Stunden veranschlagen.

Ferner erfordert der Umbau den Einsatz von zumindest einem Facharbeiter und von Hebeeinrichtungen oder ähnlichem schweren Gerät, mit deren Hilfe das Werkzeug entnommen und das neue wieder eingesetzt wird. Außerdem muss der erforderliche Raumbedarf für den Einsatz der Hebeeinrichtung und für deren Transport vorgehalten werden.

Falls mehrere verschiedene Bauteile in der Schließvorrichtung hergestellt werden sollen, um die Schließvorrichtung auszulasten, und es aus fertigungsablaufbezogenen Gründen notwendig ist, die Bauteilsequenz variabel zu gestalten, wird eine platzsparende Schließvorrichtung benötigt, die einen schnellen Wechsel von Werkzeugen gestattet.

### Darstellung der Erfindung

Der Erfindung liegt daher die Aufgabe zugrunde, eine Schließvorrichtung zum Bearbeiten von Bauteilen, insbesondere Formen von Verkleidungselementen, zur Verfügung zu stellen, mit welcher es möglich ist, die Zeit beim Wechseln eines Werkzeuges wesentlich zu verkürzen, den Einsatz an Personal zu minimieren und den Einsatz an zusätzlichen Hilfsmitteln ebenfalls zu verringern.

Die Lösung der Aufgaben erfolgt durch eine Schließvorrichtung gemäß dem Gegenstand des Patentanspruchs 1. Bevorzugte Ausgestaltungen der erfindungsgemäßen Vorrichtung ergeben sich aus den Unteransprüchen.

Die Erfindung fußt auf dem Gedanken, das Werkzeug auf geschickte Weise so anzuordnen, dass ein schnellerer Wechsel zu einem anderen Werkzeug möglich ist.

Dazu weist die erfindungsgemäße Schließvorrichtung zum Bearbeiten von Bauteilen, unter anderem von Verkleidungselementen, einen um eine im Wesentlichen vertikale Achse drehbaren Drehtisch mit mindestens zwei Werkzeugaufnahmeabschnitten auf, wobei die Werkzeugaufnahmeabschnitte dazu geeignet sind, um ein Werkzeug in einer Ruhestellung in jedem der Werkzeugaufnahmeabschnitte aufzunehmen und eine Schließeinrichtung (Arbeitsstellung), die dazu ausgebildet ist, um eines der Werkzeugoberteile, das lösbar an ihr befestig ist, in Richtung des Werkzeugunterteils zu bewegen.

Auf diese Weise ist es vorteilhaft möglich, den Wechsel von einem Werkzeug hin zu einem anderen Werkzeug wesentlich zu beschleunigen, da aufgrund dessen, dass in einem Werkzeugaufnahmeabschnitt jeweils ein Werkzeug anordenbar ist, die Wechselzeit wesentlich reduziert werden kann, da es lediglich erforderlich ist, das Werkzeug in der Arbeitsstellung zu lösen, den Drehtisch zu verdrehen und anschließend das Werkzeug an der Schließeinrichtung anzuordnen. Auf diese Weise reduziert sich nicht nur der Zeiteinsatz, welcher für das Wechseln benötigt wird, sondern es wird auch kein schweres Hilfsmittel, wie beispielsweise ein Gabelstapler oder dergleichen, benötigt, um den Wechsel durchzuführen und der Einsatz an benötigtem Personal lässt sich reduzieren.

Eine Schließvorrichtung ist beispielsweise eine Vorrichtung, mit der es möglich ist, einen Rohling eines Fahrzeugarmaturenbrettes formgebend zu bearbeiten und beispielsweise Elemente aus diesem auszustanzen, Löcher bzw. Ausnehmungen in diesen einzubringen. Es kann ferner auch vorgesehen sein, dass Umform-, Trenn- und Fügebearbeitungsvorgänge mit der Schließvorrichtung durchführbar sind. Als Drehtisch eignet sich jede drehbare Anordnung, wobei der Drehtisch nicht zwangsweise rund sein muss. Werkzeugaufnahmeabschnitte sind Abschnitte, die dazu in der Lage sind, ein Werkzeugoberteil, dass von der Schließeinrichtung gelöst wurde und auf dem Werkzeugunterteil abgelegt wurde, aufzunehmen. Der Werkzeugaufnahmeabschnitt weist zudem Mittel auf, um das Werkzeugunterteil und/oder das Werkzeugoberteil mit Energie einer Leistungsquelle zu beaufschlagen.

Gemäß einer Ausführungsform ist ein oberer Abschnitt der Schließeinrichtung dazu ausgebildet, das Werkzeugoberteil selbstständig bzw. automatisch aufzunehmen und/oder dazu geeignet, um in Richtung eines unteren Abschnitts der Schließeinrichtung und von diesem weg beweglich zu sein. Auf diese Weise ist es vorteilhaft möglich, den Einsatz von Facharbeitskräften beim Wechsel des Werkzeuges zu reduzieren. Ferner können durch Bewegen des oberen Abschnitts, wenn an diesem das Werkzeugoberteil befestigt ist, vorteilhaft zur Bearbeitung eines Bauteiles in Richtung des Werkzeugunterteils bewegt werden.

Gemäß einer weiteren bevorzugten Ausführungsform ist zumindest der obere Abschnitt der Schließeinrichtung über eine in der Mitte des Drehtisches angeordnete Säule und/oder über zumindest zwei außerhalb des Drehtisches angeordnete Säulen abstützbar. Auf diese Weise ist es möglich, die Schließvorrichtung in Bezug auf Kraft- und Momenteinwirkung günstig abzustützen.

Der Drehtisch kann ferner eine Drehlagereinrichtung aufweisen, die so ausgebildet ist, dass sie beim Wirken der Schließeinrichtung, also beim Bewegen des Werkzeugoberteils in Richtung des Werkzeugunterteils, im Wesentlichen unbelastet ist. Auf diese Weise ist es vorteilhaft möglich, die Drehlagereinrichtung vor dem hohen Krafteintrag beim Wirken der Schließeinrichtung zu schonen. Auf diese Weise ist es besonders vorteilhaft möglich, die Lager, welche die Drehlagereinrichtung verwendet, klein auszulegen.

Die Drehlagereinrichtung kann dabei so ausgebildet sein, dass sie den Drehtisch erst dann stützt, wenn der Drehtisch von einer Arbeitsstellung in eine Drehstellung angehoben wurde. Dabei ist die Drehlagereinrichtung in der Drehstellung im Wesentlichen unbelastet. In anderen Worten ruht in der Drehstellung lediglich die Last des Werkzeuges auf dem Drehtisch. Auf diese Weise ist es möglich, den Drehtisch beispielsweise während des Wirkens des Werkzeugoberteils auf einer Auflage zu platzieren und nur für den Wechsel des Werkzeuges anzuheben und mittels der Drehlagereinrichtung zu drehen.

Alternativ kann die Drehlagereinrichtung so ausgebildet sein, dass sie den Drehtisch erst stützt, wenn eine Auflage, die ausgebildet ist, um den Drehtisch in einer Arbeitsstellung zu stützen und in einer Drehstellung nicht zu stützen, abgesenkt wird. Dabei ist die Drehlagereinrichtung in der Drehstellung im Wesentlichen unbelastet. Auf diese Weise ist es möglich, den Drehtisch im Wesentlichen immer auf dem gleichen Höhenniveau zu halten und, wenn der Drehtisch zum Wechsel des Werkzeuges gedreht wird, die Auflage abzusenken und damit die Drehbewegung der Drehlagereinrichtung und des Drehtisches freizugeben.

Gemäß einer weiteren besonders bevorzugten Ausführungsform weist die Schließeinrichtung Mittel zur Beaufschlagung des Werkzeugoberteils und des Werkzeugunterteils mit Energie, insbesondere mit elektrischer Energie, Druckluft, Hydraulikfluid und/oder mit Schmiermittel auf. Mittel zur Versorgung des Werkzeuges mit Material, welches zur Bearbeitung der Bauteile benötigt wird, können ebenfalls vorgesehen sein. Auf diese Weise ist es besonders vorteilhaft möglich, die Arbeitseffizienz und Verlässlichkeit der Schließvorrichtung wesentlich zu steigern.

Ferner ist es möglich, dass eine Schnellkopplung zwischen dem Werkzeugoberteil und dem oberen Abschnitt der Schließvorrichtung und/oder zwischen dem Werkzeugunterteil und dem unteren Abschnitt der Schließeinrichtung vorgesehen ist. Auf diese Weise ist es zusätzlich möglich, die Wechselzeit der Schließvorrichtung weiter zu reduzieren. Auf diese Weise wird die Flexibilität und Arbeitseffizienz der Schließvorrichtung wesentlich gesteigert.

Die Schließvorrichtung kann dabei ferner so ausgebildet sein, dass der Wechsel von dem an der Schließeinrichtung angeordneten einen Formwerkzeugaufnahmeabschnitt hin zu einem anderen Formwerkzeugaufnahmeabschnitt und das Lösen sowie das Aufnehmen des Werkzeugoberteils in dem oberen Abschnitt der Formwerkzeugschließeinrichtung innerhalb von zehn Minuten, bevorzugt innerhalb von fünf Minuten, noch bevorzugter innerhalb von zwei Minuten, durchführbar ist. Somit ist es möglich, die Wechselzeiten des Werkzeuges hin zu einem anderen Werkzeug wesentlich zu reduzieren und somit die Flexibilität und Effizienz einer Fahrzeugfertigungsstraße, an welcher die Schließvorrichtung angeordnet sein kann, erheblich zu steigern.

Gemäß einer weiteren besonders bevorzugten Ausführungsform ist das Werkzeugoberteil hydraulisch oder magnetisch an dem oberen Abschnitt der Schließeinrichtung ankoppelbar. Auf diese Weise kann eine besonders effiziente Ankoppelung des Werkzeugoberteils an dem oberen Abschnitt der Schließeinrichtung erwirkt werden.

### Kurze Beschreibung der Zeichnungen

Fig. 1 zeigt eine perspektivische Darstellung einer erfindungsgemäßen Schließvorrichtung mit eingesetzten Werkzeugen,
Fig. 2 zeigt eine reduzierte Darstellung einer erfindungsgemäßen Schließvorrichtung ohne Werkzeuge und
Fig. 3 zeigt eine Schnittansicht durch eine erfindungsgemäße Schließvorrichtung.

### Ausführliche Beschreibung der Erfindung

Im Folgenden wird eine erfindungsgemäße Schließvorrichtung 10 zum Bearbeiten von Bauteilen, unter anderem von Kraftfahrzeugverkleidungselementen, unter Bezugnahme auf die beiliegenden Figuren anhand eines beispielhaften Ausführungsbeispiels beschrieben.

Die erfindungsgemäße Schließvorrichtung 10 weist einen oberen Abschnitt 16 auf. Dieser obere Abschnitt 16 wird auch als Pressbär bezeichnet. In dem oberen Abschnitt 16 kann ein Werkzeugoberteil 20 lösbar aufgenommen werden.

Das Werkzeugoberteil 20 ist dabei so ausgebildet, um gemeinsam mit einem Werkzeugunterteil 21, welches auf einem unteren Abschnitt 18 angeordnet ist, auf ein Bauteil zu wirken. Der untere Abschnitt 18 wird auch Pressentisch genannt.

Auf diese Weise ist es möglich, das Bauteil formgebend zu bearbeiten, wobei sowohl Umform-, Trenn- und Fügebearbeitungsvorgänge durchgeführt werden können.

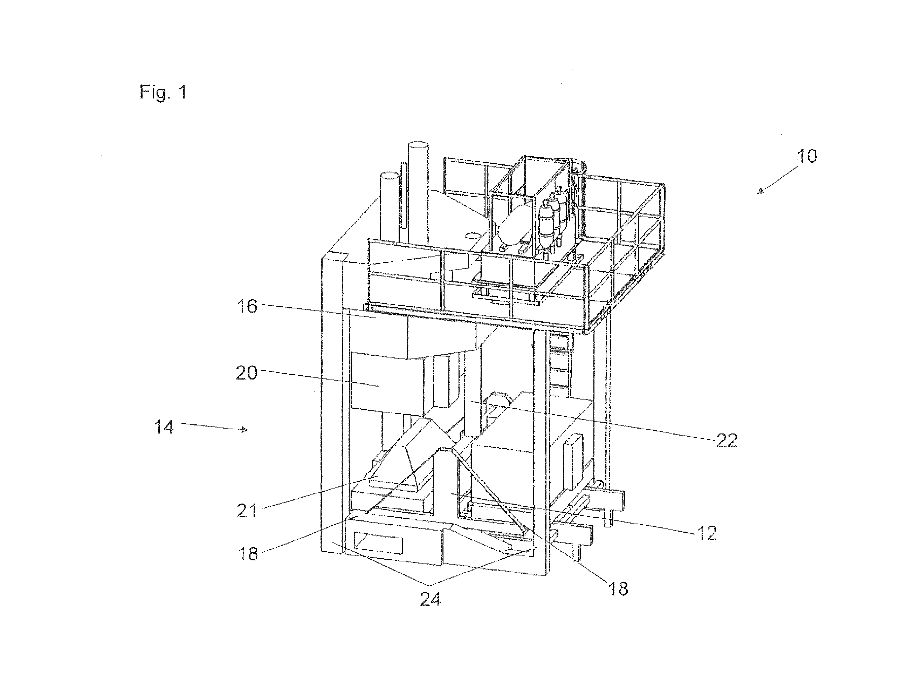

Der untere Abschnitt 18 ist, wie in Fig. 1 zu erkennen ist, an einem Drehtisch 12 angeordnet. An dem Drehtisch 12 sind in dem gezeigten Ausführungsbeispiel zwei untere Abschnitte 18 angeordnet. Es ist jedoch möglich, bei geeigneter Umgestaltung des Drehtisches 12 auch drei oder mehr untere Abschnitte 18 an dem Drehtisch anzuordnen.

Der Drehtisch 12 wird dabei so gedreht, dass jeweils der untere Abschnitt 18 im Wesentlichen unterhalb des oberen Abschnitts 16 der Schließeinrichtung 14 angeordnet ist, mit welchem eine Bearbeitung eines Bauteiles durchgeführt werden soll. Der andere untere Abschnitt 18 befindet sich dann folglich in einer Parkposition. In der Parkposition ist sowohl das Werkzeugunterteil 21 als auch das Werkzeugoberteil 20 auf dem unteren Abschnitt 18 angeordnet. In dieser Position ist das Werkzeug von vier Seiten zugänglich.

In der Arbeitsposition, in welcher der unteren Abschnitt 18 im Wesentlichen unterhalb des oberen Abschnitts 16 der Schließeinrichtung 14 angeordnet ist, kann das Werkzeugunterteil 21 fest oder lose an dem Drehtisch 12 angeordnet sein und das Werkzeugoberteil 20 wird an dem oberen Abschnitt 16 der Schließeinrichtung 14 fixiert.

Die Fixierung des Werkzeugoberteils 20 an dem oberen Abschnitt 16 und gegebenenfalls des Werkzeugunterteils 21 an dem unteren Abschnitt 18 erfolgt dabei bevorzugt mittels einer Hydraulikeinrichtung in Verbindung mit einer Schnellkupplung und kann so ausgebildet sein, dass ein menschlicher Eingriff dafür nicht notwendig ist.

Um das Bauteil, welches auf dem Werkzeugunterteil 21 angeordnet ist, zu bearbeiten, wird das Werkzeugoberteil 20 von dem oberen Abschnitt 16 der Schließeinrichtung 14 in Richtung des Werkzeugunterteils 21 bewegt. Die möglichen Bearbeitungsvarianten wurden oben bereits angeführt.

Ist nun ein Wechsel des Werkzeugoberteils 20 und des Werkzeugunterteils 21 erforderlich, so wird das Werkzeugoberteil 20 auf dem Werkzeugunterteil 21 durch den oberen Abschnitt 16 der Schließeinrichtung 14 abgesetzt und die Verbindung zwischen dem Werkzeugoberteil 20 und dem oberen Abschnitt 16 der Schließeinrichtung 14 gelöst.

Anschließend wird der Drehtisch so gedreht, dass der geforderte untere Abschnitt 18 im Wesentlichen unterhalb des oberen Abschnitts 16 der Schließeinrichtung 14 angeordnet wird und das neue Werkzeugoberteil 20 wird an dem oberen Abschnitt 16 der Schließeinrichtung 14 befestigt. Der beschriebene Wechselvorgang kann dabei weniger als zehn Minuten, bevorzugt weniger als fünf Minuten, noch bevorzugter weniger als zwei Minuten, dauern. Auf diese Weise ist ein flexibles Bearbeiten von unterschiedlichen Bauteilen möglich und es kann anforderungsgemäß auf die Bedürfnisse der Fertigungssequenz reagiert werden.

Zu Reparaturzwecken bzw. falls ein gänzlich anderes Bauteil bearbeitet werden soll, ist es möglich, die Werkzeuge (20, 21) jeweils von dem Drehtisch zu lösen und mittels geeigneter Hilfsmittel auszutauschen.

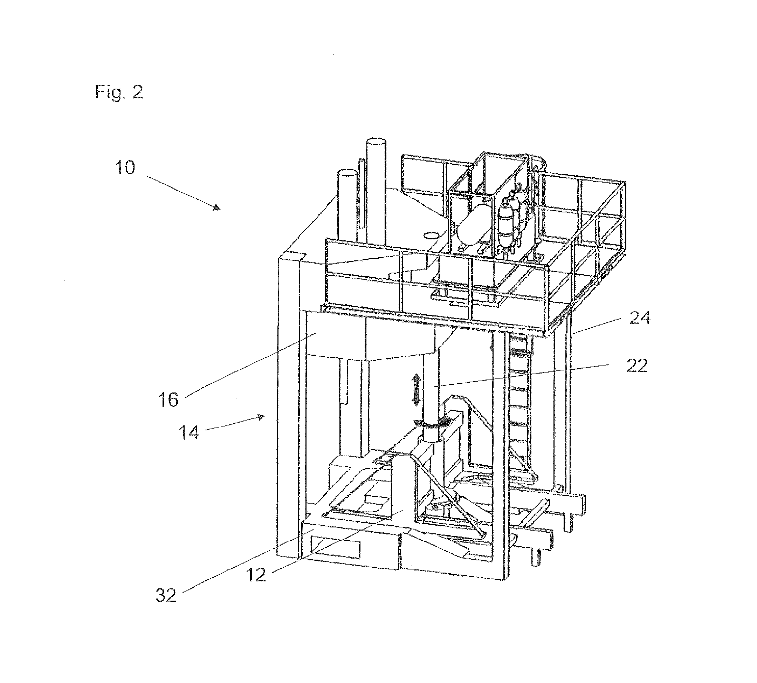

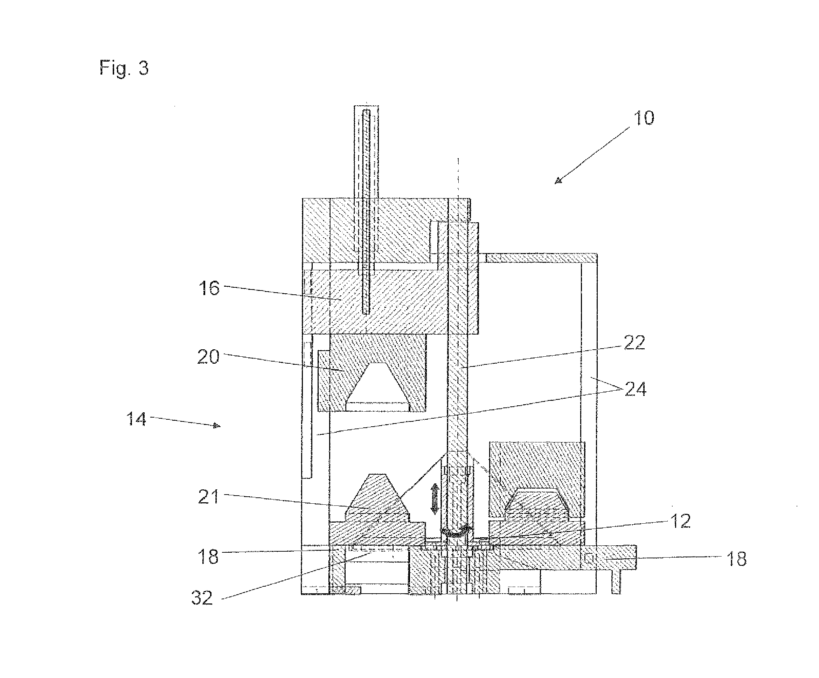

Der Drehtisch 12 wird durch eine Drehlagereinrichtung abgestützt. Die Drehlagereinrichtung ist dabei so ausgebildet, dass sie den Drehtisch 12 nur während des Drehens stützt, d. h. die Drehlagereinrichtung nimmt das Gewicht des Drehtisches nur während der Drehung auf. Während dem Öffnen und Schließen des oberen Abschnitts 16 der Schließeinrichtung 14 kann der Drehtisch 12 auf einer Auflagefläche 32 aufliegen (siehe Fig. 2). Um den Drehtisch zu drehen ist es zum Einen möglich, den Drehtisch 12 anzuheben und zum Anderen ist es auch möglich, die Auflagefläche 32 abzusenken und die Höhe des Drehtisches 12 unverändert zu lassen und somit die Drehlagereinrichtung des Drehtisches freizugeben. Zum Drehen des Drehtisches 12 kann ein Elektromotor in Verbindung mit einem geeigneten Getriebe verwendet werden. Die in Fig. 3 gezeigten Pfeile verdeutlichen eine mögliche Anhebe- und Senkbewegung des Drehtisches 12 beim Drehen.

Im Zentrum des Drehtisches befindet sich in dem gezeigten Ausführungsbeispiel eine Säule 22, welche in Verbindung mit den außerhalb des Drehtisches angeordneten Säulen 24 die oberen Elemente der Schließvorrichtung 10, also beispielsweise den oberen Abschnitt 16 der Schließeinrichtung 14, stützt. Es ist jedoch auch möglich, die Schließvorrichtung 10 lediglich mit den Säulen 24 zu versehen.

## Patentansprüche

1. Schließvorrichtung (10) zum Bearbeiten von Bauteilen, unter anderem von Kraftfahrzeugverkleidungselementen, umfassend:
- einen um eine im Wesentlichen vertikale Achse drehbaren Drehtisch (12) mit mindestens zwei unteren Abschnitten (18),
- wobei die unteren Abschnitte (18) dazu ausgebildet sind, um ein Werkzeugoberteil (20) und ein Werkzeugunterteil (21) in einer Ruhestellung gemeinsam aufzunehmen, und
- eine Schließeinrichtung (14), die dazu ausgebildet ist, um eines der Werkzeugoberteile (20), das lösbar an ihr befestigt ist, in Richtung des Werkzeugunterteils (21) zu bewegen.

2. Schließvorrichtung nach Anspruch 1, **dadurch gekennzeichnet, dass** ein oberer Abschnitt (16) der Schließeinrichtung (14) dazu ausgebildet ist, das Werkzeugoberteil (20) selbstständig aufzunehmen, und/oder dass der obere Abschnitt in Richtung eines unteren Abschnitts (17) der Schließeinrichtung (14) und von diesem weg bewegbar ist.

3. Schließvorrichtung nach Anspruch 1 oder 2, **dadurch gekennzeichnet, dass** zumindest der obere Abschnitt (16) der Schließeinrichtung (14) über eine in der Mitte des Drehtisches (12) angeordnete Säule (22) und/oder über zumindest zwei außerhalb des Drehtisches (12) angeordnete Säulen (24) abstützbar ist.

4. Schließvorrichtung nach einem der vorhergehenden Ansprüche, **dadurch gekennzeichnet, dass** der Drehtisch eine Drehlagereinrichtung aufweist, wobei die Drehlagereinrichtung so ausgebildet ist, dass sie beim Wirken der Schließvorrichtung (16) im Wesentlichen unbelastet ist.

5. Schließvorrichtung nach Anspruch 4, **dadurch gekennzeichnet, dass** die Drehlagereinrichtung so ausgebildet ist, dass sie den Drehtisch (12) erst stützt, wenn der Drehtisch (12) von einer Arbeitsstellung in eine Drehstellung angehoben wurde, wobei die Drehlagereinrichtung in der Drehstellung im Wesentlichen unbelastet ist.

6. Schließvorrichtung nach Anspruch 4, **dadurch gekennzeichnet, dass** die Drehlagereinrichtung so ausgebildet ist, dass sie den Drehtisch (12) erst stützt, wenn eine Auflage, die ausgebildet ist, um den Drehtisch in einer Arbeitstellung zu stützen und in einer Drehstellung nicht zu stützen, abgesenkt wird, wobei die Drehlagereinrichtung in der Drehstellung im Wesentlichen unbelastet ist.

7. Schließvorrichtung nach einem der vorhergehenden Ansprüche, **dadurch gekennzeichnet, dass** die Schließeinrichtung (14) Mittel zur Beaufschlagung des Werkzeugoberteils (20) und des Werkzeugunterteils (21) mit Energie, insbesondere mit elektrischer Energie, Druckluft, Hydraulikfluid, und/oder mit Schmiermittel aufweist.

8. Schließvorrichtung nach einem der vorhergehenden Ansprüche, **dadurch gekennzeichnet, dass** eine Schnellkupplung zwischen dem Werkzeugoberteil (20) und dem oberen Abschnitt (16) und /oder zwischen dem Werkzeugunterteil (21) und dem unteren Abschnitt (18) Schließeinrichtung (14) vorgesehen ist.

9. Schließvorrichtung nach einem der vorhergehenden Ansprüche, **dadurch gekennzeichnet, dass** die Schließvorrichtung (10) so ausgebildet ist, dass der Wechsel von dem an der Schließeinrichtung (14) angeordneten unteren Abschnitt (18) zu einem anderen unteren Abschnitt (18) und das Aufnehmen des Werkzeugoberteils (20) in dem oberen Abschnitt (16) der Schließeinrichtung (14) innerhalb von 10 Minuten, bevorzugt innerhalb von 5 Minuten, noch bevorzugter innerhalb von 2 Minuten, durchführbar ist.

10. Schließvorrichtung nach einem der vorhergehenden Ansprüche, **dadurch gekennzeichnet, dass** das Werkzeugoberteil (20) hydraulisch oder magnetisch an dem oberen Abschnitt(16) der Schließeinrichtung (14) ankoppelbar ist.
